# EUROPÄISCHE PATENTSCHRIFT

(11) **EP 1 924 485 B1**
(45) Veröffentlichungstag und Bekanntmachung des Hinweises auf die Patenterteilung: **24.11.2010**
(21) Anmeldenummer: 06775942.3
(22) Anmeldetag: 08.09.2006
(51) Int. Cl.: B62D 21/11

(54) **HILFSRAHMEN, INSBESONDERE FÜR KRAFTFAHRZEUGE**
AUXILIARY FRAME, PARTICULARLY FOR MOTOR VEHICLES
CHASSIS SECONDAIRE DESTINE EN PARTICULIER A DES VEHICULES AUTOMOBILES

(30) Priorität: 13.09.2005 DE 102005043764
(43) Veröffentlichungstag der Anmeldung: 28.05.2008
(60) Teilanmeldung: 10001389.5
(73) Patentinhaber: KSM CASTINGS GMBH, 31137 Hildesheim (DE); IAMT, Ingenieurgesellschaft für Allgemeine Maschinentechnik mbH, 08538 Weisdelitz (DE)
(72) Erfinder: BUSCHJOHANN, Thomas, 31171 Nordstemmen (DE); KAUERT, Heiko, 14974 Ludwigsfelde (DE)
(74) Vertreter: Patentanwälte Thömen & Körner
(86) Internationale Anmeldenummer: PCT/DE2006/001581
(87) Internationale Veröffentlichungsnummer: WO 2007/031059

(56) Entgegenhaltungen:
- DE-A1- 3 927 987
- US-B1- 6 623 020
- US-B1- 6 755 429

## Beschreibung

Die Erfindung bezieht sich auf einen Hinterachshilfsrahmen für Kraftfahrzeuge mit Mehrlenker-Hinterachsen.

Solche Mehrlenker-Hinterachsen bieten für sich optimale Möglichkeiten zur gezielten Beeinflussung der Radführung und des Fahrverhaltens in den verschiedensten Fahrsituationen. Die Lenker und auch andere Elemente eines Fahrzeuges werden dabei in der Regel auf einem Hilfsrahmen, auch als Fahrschemel oder Achsträger bezeichnet, zu einer Einheit vormontiert und diese an Karosseriebereichen bzw. dem Chassis befestigt.

Die US 6,23,020 B1 offenbart einen Hinterachshilfsrahmen für Mehrlenker-Hinterachsen von Kraftfahrzeugen, bestehend aus zwei Hilfsrahmen-Seitenteilen und zwei Hilfsrahmen-Querteilen, wobei die Hilfsrahmen-Seitenteile und die Hilfsrahmen-Querteile Hohlprofile sind und die Hilfsrahmen-Seitenteile Aufnahmen bzw. Ausnehmungen für obere Querlenker, für untere Querlenker und zur Befestigung des Hilfsrahmens an der Karosserie aufweisen.

Die bisher bekannten so ausgebildeten Hinterachsen haben jedoch häufig den Nachteil eines sehr hohen Fertigungsaufwandes und sind dementsprechend kostenintensiv.

Der vorliegenden Erfindung lag die Aufgabe zugrunde, solche Hinterachsen schneller, einfacher und damit kostengünstiger herzustellen und die Einsatzmöglichkeiten zu erweitern, was wegen der damit verbundenen höheren Stückzahlen wiederum zu preisgünstigeren Erzeugnissen führt.

Weiterhin sollen durch Einsatz von fortschrittlichen und kostengünstigen Gießtechnologien sowie optimaler Materialien die Kosten weiter gesenkt, die Genauigkeit erhöht und die Qualität verbessert werden.

Gemäß der Erfindung wird dies dadurch erzielt, dass ein Hinterachs-Hilfsrahmen für Mehrlenker-Hinterachsen von Kraftfahrzeugen derart ausgestaltet wird, dass er aus zwei Hilfsrahmen-Seitenteilen besteht, die zumindest annähernd V-förmig ausgebildet sind, in einer solchen Anordnung, dass deren Scheitelpunkte aufeinander zu gerichtet sind und über ein quer zur Fahrzeuglängsachse liegendes Hilfsrahmen-Mittelteil miteinander verbunden sind, die Hilfsrahmen-Seitenteile und das Hilfsrahmen-Mittelteil als Hohlprofile ausgebildet sind und die Hilfsrahmen-Seitenteile zumindest drei der nachfolgend angeführten Aufnahmen bzw. Ausnehmungen für
- die oberen Querlenker
- die unteren Querlenker
- den Stabilisator
- die Längslenker
- die Befestigung des Hilfsrahmens an der Karosserie aufweisen.

Dabei kann es besonders vorteilhaft sein, wenn die V-förmigen Hilfsrahmen-Seitenteile einen U-förmigen Querschnitt aufweisen mit zwischen den Schenkeln verlaufenden Verstärkungsrippen.

Die V-förmigen Seitenteile können in ihrem Scheitelbereich den Fuß eines Y angeformt haben mit einem dem Hilfsrahmen-Mittelteil entsprechenden Querschnitt, wobei das Hilfsrahmen-Mittelteil in den Scheitelbereichen bzw. dem Fußbereich des Y aufgenommen sein kann. Als Profil für das Hilfsrahmen-Mittelteil kann sich in besonders vorteilhafter Weise ein viereckiges Hohlprofil eignen, das ein Strangpressprofil sein kann.

Bei Einsatz unterschiedlich langer Hilfsrahmen-Mittelteile können Fahrzeuge mit unterschiedlicher Spurbreite mit einheitlichen Hilfsrahmen-Seitenteilen ausgerüstet werden, was wegen der zum Einsatz kommenden höheren Stückzahlen eine preiswerte Herstellung erheblich begünstigt.

Vorteilhaft ist es weiterhin, wenn die Hilfsrahmen-Seitenteile und/oder das Hilfsrahmen-Mittelteil aus Leichtmetall bestehen, wobei sich in besonders günstiger Weise Al-Legierungen eignen. Dabei können die Hilfsrahmen-Seitenteile Druckgussteile sein und das Hilfsrahmen-Mittelteil, wie bereits erwähnt, ein Strangpressprofil. Solche Teile lassen sich auch in relativ einfacher Weise miteinander durch Schweißen verbinden.

Die Ausnehmungen zur Befestigung des Hilfsrahmens an der Karosserie bzw. zur Durchführung von Befestigungselementen sind dabei zweckmäßigerweise jeweils am Ende der Schenkel der Hilfsrahmen-Seitenteile vorgesehen.

Ein weiterer nicht beanspruchter Gedanke bezieht sich auf eine besondere Ausgestaltung eines Längslenker, der sowohl im Zusammenhang mit einem Hilfsrahmen der beschriebenen Art verwendet werden kann, als auch bei andersartig gestalteten Hinterachsen. Dieser zeichnet sich dadurch aus, dass derselbe in seinem Bereich zwischen einem Anlenkpunkt am Hilfsrahmen und seinem am anderen Ende einstückig angeformten Radträgerbereich ein Hohlprofil ist. Dabei kann das Hohlprofil ein geschlossenes Profil, zum Beispiel ein Rundprofil sein, das vorzugsweise aus Leichtmetall besteht, zum Beispiel aus einer AI-Legierung.

Besonders vorteilhaft in Bezug auf eine zu erzielende hohe Steifigkeit ist es, wenn der Längslenker in seinem Bereich zwischen Befestigungsstelle am Hilfsrahmen und seinem Radträgerbereich zusätzlich einen Hohlkörper enthält, wobei es hinsichtlich einer zu erzielenden Leichtbauweise vorteilhaft sein kann, wenn der Längslenker ein Al-Kokillengussteil ist, in dem der weitere Hohlkörper eingegossen ist.

Anhand der Figuren 1 bis 7 sei die Erfindung näher erläutert.

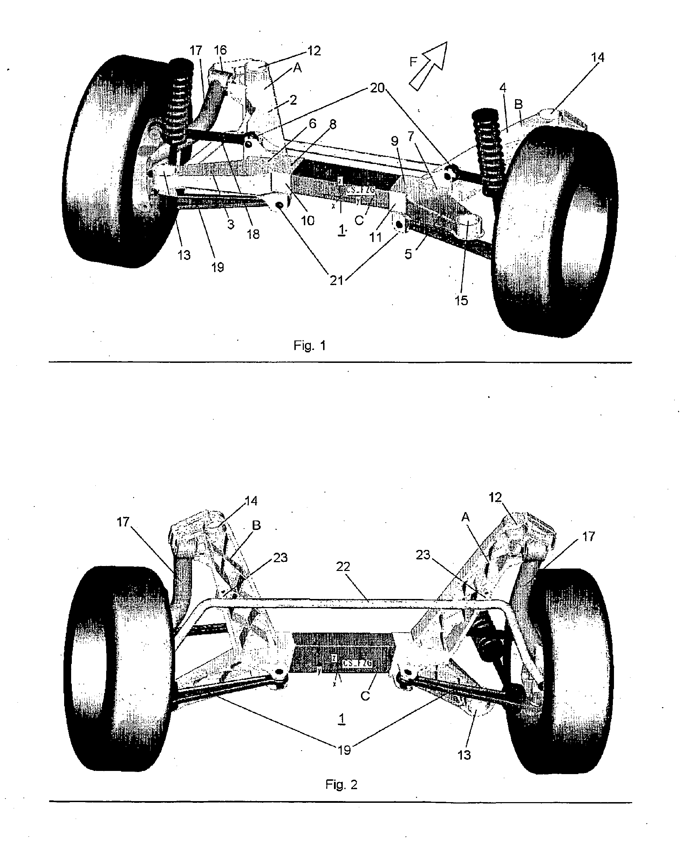

Dabei zeigt Figur 1 eine Hinterachse mit einem Hilfsrahmen 1 und daran befestigten Achselementen am Beispiel einer nicht angetriebenen Hinterachse.

Figur 2 zeigt eine Ansicht aus der Figur 1 mit um die Achsen XYZ vorgenommener Verschwenkung,

Figur 3 den Hilfsrahmen 1 aus einer der Figur 2 entsprechenden Perspektive,

Figur 4 eine Ansicht des Hilfsrahmens 1 aus einer ähnlichen Sicht wie Figur 1.

Die Figuren 5 bis 7 zeigen einen speziellen Längslenker gemäß einem weiteren, nicht beanspruchten Erfindungsgedanken, wobei

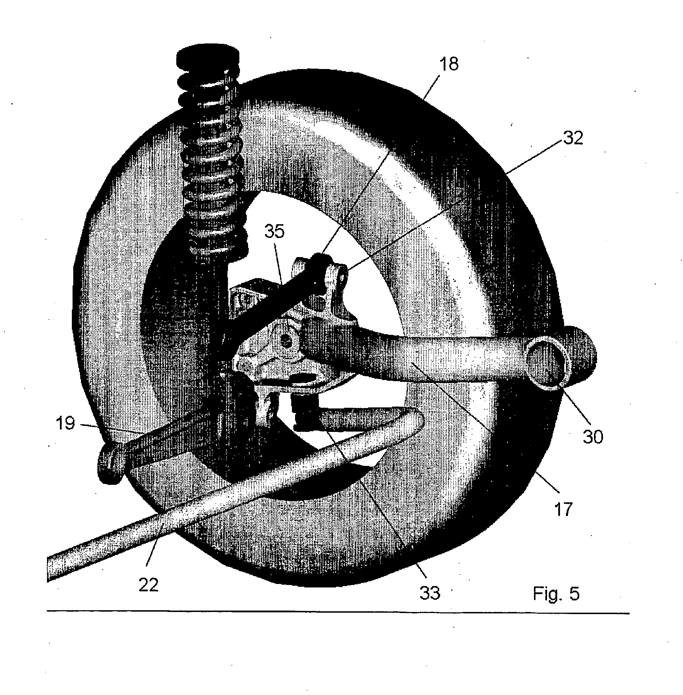

Figur 5 den Längslenker in eingebautem Zustand zeigt,

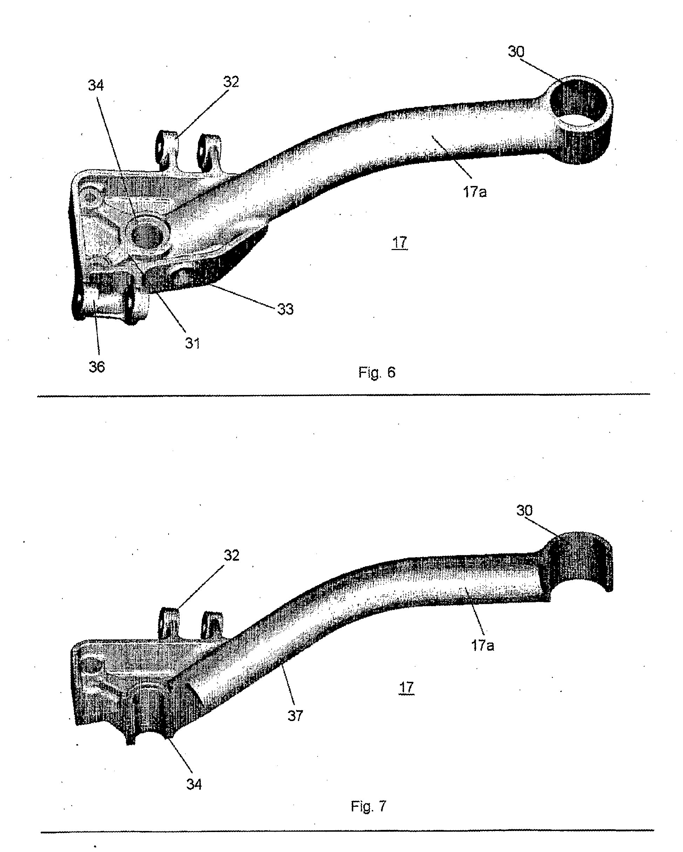

Figur 6 einen solchen in Ansicht und

Figur 7 einen solchen in aufgeschnittenem Zustand.

Der Hilfsrahmen 1 besteht, mit Sicht auf die Figur 1 und in Fahrtrichtung F gesehen, aus einem linken Hilfsrahmen-Seitenteil A und einem rechten Hilfsrahmen-Seitenteil B. Jedes der Seitenteile besitzt zumindest annähernd V-förmige Gestalt mit Schenkeln 2, 3 sowie 4, 5. Die beiden Schenkel treffen sich jeweils in ihrem Scheitelbereich 6, 7 und haben weiterhin einen Fußansatz 8,9 und somit insgesamt eine zumindest annähernd Y-förmige Gestalt. Die Fußansätze weisen in Richtung der Fahrzeuglängsachse, also aufeinander zu und haben die Profilierung eines Rechteckes 10, 11 in denen das Hilfsrahmen-Mittelteil C aufgenommen und mit den Profilen 8, 9 verschweißt ist.

An den Enden der V-förmigen Schenkel sind jeweils die Befestigungsstellen bzw. die Aufnahmen für den Durchgang von Befestigungsmittel zur Anlenkung des Hilfsrahmens an der Karosserie bzw. am Chassis des Fahrzeuges vorgesehen, und zwar besitzt das linke Hilfsrahmen-Seitenteil A eine vordere Befestigungsstelle 12, eine hintere Befestigungsstelle 13 und das rechte Hilfsrahmen-Seitenteil B eine vordere Befestigungsstelle 14 und eine hintere Befestigungsstelle 15. Der Hilfsrahmen besitzt weiterhin Aufnahmestellen für die Befestigung von Teilen der Hinterachse, die der Einfachheit wegen für das rechte und das linke Seitenteil mit jeweils gleichen Bezugszeichen versehen sind und zum Teil auch nur einmal dargestellt sind, nachdem es sich praktisch um spiegelbildliche Anordnungen handelt.

An der Befestigungsstelle 16 ist der Längslenker 17 angelenkt, die oberen und unteren Querlenker 18, 19 sind an Befestigungsstellen 20, 21 angelenkt.

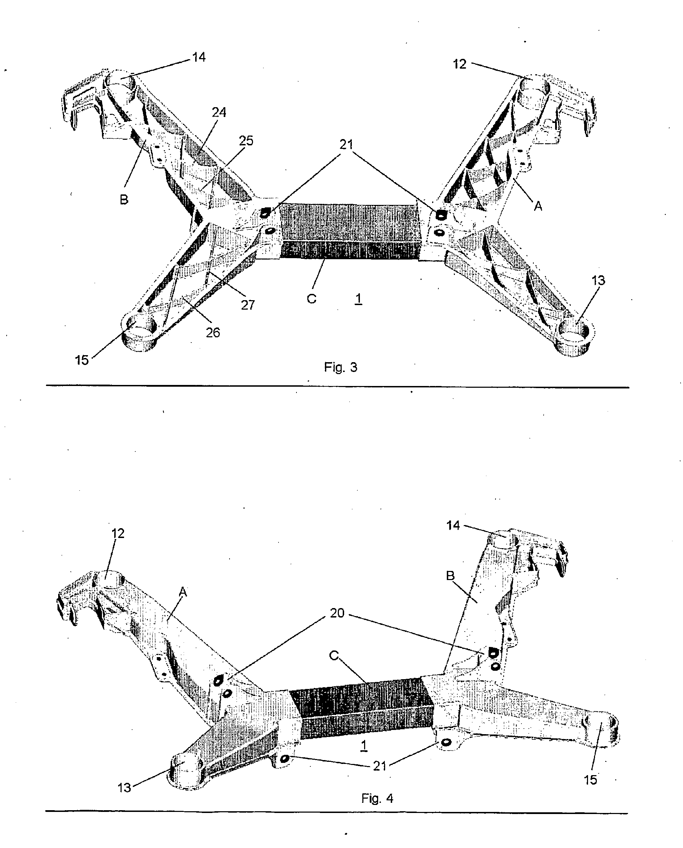

Für den Stabilisator 22 sind, wie dies insbesondere im Zusammenhang mit den Figuren 2 und 3 hervorgeht, Befestigungsstellen 23 am unteren Bereich der Hilfsrahmen-Seitenteile vorgesehen.

Wie insbesondere im Zusammenhang mit den Figuren 2 und 3 ersichtlich ist, haben die Hilfsrahmen-Seitenteile einen U-förmigen Querschnitt mit Verstärkungsrippen 24, 25 und 26, 27, die zumindest im Wesentlichen zwischen den U-förmigen Schenkeln der Seitenteile verlaufen. Die Hilfsrahmen-Seitenteile A, B können in besonders günstiger Weise aus Aluminium-Druckguss bestehen, während das Hilfsrahmen-Mittelteil C zweckmäßigerweise ein Rechteck-Hohlprofil ist, das als Aluminium-Strangpressprofil hergestellt sein kann.

Durch Variierung der Länge des Hilfsrahmen-Mittelteiles C können in besonders preiswerter Weise Hinterachsen mit unterschiedlicher Spurbreite erzeugt werden. Zur Realisierung einer preiswerten Hinterachse insbesondere, jedoch nicht ausschließlich im Zusammenhang mit der vorliegenden Erfindung kann sich auch gemäß einem weiteren nicht beanspruchten Gedanken ein Längslenker 17 gemäß den Figuren 5, 6 und 7 eignen, der mit seinem Auge 30 an der Befestigungsstelle 16 angelenkt sein kann und der an seinem gegenüberliegenden Ende den Radträgerbereich 31 einstückig angeformt hat. Der Bereich 32 dient zur Ablenkung des oberen Querlenkers 18 und die Anlenkstelle 33 zur Anlenkung des Stabilisators 22. In einer Aufnahmeöffnung 34 ist ein Stahl-Achszapfen 35 zur Aufnahme des Radlagers vorgesehen. Eine Befestigungsstelle 36 dient zur Anlenkung des Querlenkers 19.

Der Längslenker 17 mit seinem einstückig angeformten Radträgerbereich 31 kann in besonders günstiger Weise als Aluminium-Kokillen-Gussteil hergestellt sein, welches in seinem zwischen den Befestigungsstellen 30 und 34 liegenden Bereich 17a ein Aluminiumrohr, das eingegossen ist, enthält. Dadurch ist der entsprechende Längslenker als Hohlprofil für eine hohe Steifigkeit bei gleichzeitig geringer Masse und geringen Kosten ausgebildet.

## Patentansprüche

1. Hinterachshilfsrahmen für Mehrlenker-Hinterachsen von Kraftfahrzeugen, bestehend aus zwei Hilfsrahmen-Seitenteilen (A, B), die zumindest annähernd V-förmig ausgebildet sind, in einer Anordnung, dass deren Scheitelpunkte (6, 7) aufeinander gerichtet sind und über ein quer zur Fahrzeuglängsachse (F) liegendes Hilfsrahmen-Mittelteil (C) miteinander verbunden sind, die Hilfsrahmen-Seitenteile (A, B) und das Hilfsrahmen-Mittelteil (C) Hohlprofile sind und die Hilfsrahmen-Seitenteile (A, B) zumindest drei der nachfolgend angeführten Aufnahmen bzw. Ausnehmungen
- (20) die oberen Querlenker (18)
- (21) die unteren Querlenker (19)
- (23) den Stabilisator (22)
- (16) die Längslenker (17)
- (12, 13, 14, 15) die Befestigung des Hilfsrahmens (1) an der Karosserie aufweisen.

2. Hinterachshilfsrahmen nach Anspruch 1, **dadurch gekennzeichnet, dass** die V-förmigen Hitfsrahmen-Seitenteiie (A, B) einen U-förmigen Querschnitt aufweisen mit zwischen den Schenkeln verlaufenden Verstärkungsrippen (24, 25, 26, 27).

3. Hinterachshilfsrahmen nach einem der Ansprüche 1 oder 2, **dadurch gekennzeichnet, dass** die V-förmigen Seitenteile (A, B) im Scheitelbereich (6, 7) den Fuß eines Y angeformt haben mit einem dem Hilfsrahmen-Mittelteil entsprechenden Querschnitt.

4. Hinterachshilfsrahmen nach Anspruch 3, **dadurch gekennzeichnet, dass** das Hilfsrahmen-Mittelteil (C) in den Scheitelbereichen (6, 7) bzw. dem Fußbereich des Y aufgenommen ist.

5. Hinterachshilfsrahmen nach einem der Ansprüche 1 bis 4, **dadurch gekennzeichnet, dass** das Hilfsrahmen-Mittelteil (C) ein viereckiges Hohlprofil ist.

6. Hinterachshilfsrahmen nach einem der Ansprüche 1 bis 5, **dadurch gekennzeichnet, dass** die V- bzw. Y-förmigen Hilfsrahmen-Seitenteile (A, B) und der Hilfsrahmen-Mittelträger (C) miteinander verschweißt sind.

7. Hinterachshilfsrahmen nach einem der Ansprüche 1 bis 6, **dadurch gekennzeichnet, dass** die Hilfsrahmen-Seitenteile (A, B) und/oder das Hilfsrahmen-Mittelteil (C) aus Leichtmetall bestehen.

8. Hinterachshilfsrahmen nach Anspruch 7, **dadurch gekennzeichnet, dass** das Leichtmetall eine Al-Legierung ist.

9. Hinterachshilfsrahmen nach einem der Ansprüche 1 bis 8, **dadurch gekennzeichnet, dass** die Hilfsrahmen-Seitenteile (A, B) Druckgussteile sind.

10. Hinterachshilfsrahmen nach einem der Ansprüche 1 bis 9, **dadurch gekennzeichnet, dass** das Hilfsrahmen-Mittelteil (C) ein Strangpressprofil ist.

11. Hinterachshilfsrahmen nach einem der Ansprüche 1 bis 10, **dadurch gekennzeichnet, dass** die Ausnehmungen (12, 13, 14, 15) zur Befestigung des Hilfsrahmens (1) an der Karosserie am Ende der Schenkel der Hilfsrahmen-Seitenteile (A, B) vorgesehen sind.

## Claims

1. A rear axle auxiliary frame for multi-link rear axles of motor vehicles, consisting of two auxiliary frame lateral parts (A, B), which are configured at least approximately V-shaped, in an arrangement such that the vertices (6, 7) thereof are directed towards one another and are connected to each other via an auxiliary frame central part (C) that is transverse to the vehicle longitudinal axis (F), the auxiliary frame lateral parts (A, B) and the auxiliary frame central part (C) are hollow sections and the auxiliary frame lateral parts (A, B) have at least three of the following listed receptacles or recesses:
- (20) the upper transverse links (18)
- (21) the lower transverse links (19)
- (23) the stabiliser (22)
- (16) the longitudinal links (17)
- (12, 13, 14, 15) the attachment of the auxiliary frame (1) to the car body.

2. The rear axle auxiliary frame according to claim 1, **characterised in that** the V-shaped auxiliary frame lateral parts (A, B) have a U-shaped cross-section with reinforcing ribs (24, 25, 26, 27) running between the legs.

3. The rear axle auxiliary frame according to one of claims 1 or 2, **characterised in that** the V-shaped lateral parts (A, B) have formed-on, in the vertex region (6, 7), the base of a Y with a cross-section corresponding to the auxiliary frame central part.

4. The rear axle auxiliary frame according to claim 3, **characterised in that** the auxiliary frame central part (C) is received into the vertex regions (6, 7) or the base region of the Y.

5. The rear axle auxiliary frame according to one of claims 1 to 4, **characterised in that** the auxiliary frame central part (C) is a square hollow section.

6. The rear axle auxiliary frame according to one of claims 1 to 5, **characterised in that** the V-shaped or Y-shaped auxiliary frame lateral parts (A, B) and the auxiliary frame central support (C) are welded together.

7. The rear axle auxiliary frame according to one of claims 1 to 6, **characterised in that** the auxiliary frame lateral parts (A, B) and/or the auxiliary frame central part (C) are
made of light metal.

8. The rear axle auxiliary frame according to claim 7, **characterised in that** the light metal is an Al alloy.

9. The rear axle auxiliary frame according to one of claims 1 to 8, **characterised in that** the auxiliary frame lateral parts (A, B) are diecast parts.

10. The rear axle auxiliary frame according to one of claims 1 to 9, **characterised in that** the auxiliary frame central part (C) is an extruded section.

11. The rear axle auxiliary frame according to one of claims 1 to 10, **characterised in that** the recesses (12, 13, 14, 15) are provided to attach the auxiliary frame (1) to the car body at the end of the legs of the auxiliary frame lateral parts (A, B).

## Revendications

1. Châssis secondaire pour essieu arrière à plusieurs bras oscillants transversaux de véhicules automobiles, se composant de deux parties latérales de châssis secondaire (A, B) qui sont réalisées au moins approximativement en forme de V, dans un agencement tel que leurs sommets (6, 7) sont dirigés l'un vers l'autre et sont reliés l'un à l'autre via une partie médiane de châssis secondaire (C) transversale à l'axe longitudinal du véhicule (F), les parties latérales de châssis secondaire (A, B) et la partie médiane de châssis secondaire (C) sont des profilés creux et les parties latérales de châssis secondaire (A, B) présentent au moins trois des logements ou évidements énumérés ci-après
- (20) les bras oscillants transversaux supérieurs (18)
- (21) les bras oscillants transversaux inférieurs (19)
- (23) le stabilisateur (22)
- (16) les bras oscillants longitudinaux (22)
- (12, 13, 14, 15) la fixation du châssis secondaire (1) sur la carrosserie.

2. Châssis secondaire pour essieu arrière selon la revendication 1, **caractérisé en ce que** les parties latérales de châssis secondaire (A, B) en forme de V présentent une section transversale en forme de U avec des nervures de renforcement (24, 25, 26, 27) s'étendant entre les branches.

3. Châssis secondaire pour essieu arrière selon l'une quelconque des revendications 1 ou 2, **caractérisé en ce que** les parties latérales (A, B) en forme de V ont formé dans la zone du sommet (6, 7) le pied d'un Y avec une section transversale correspondant à la partie médiane de châssis secondaire.

4. Châssis secondaire pour essieu arrière selon la revendication 3, **caractérisé en ce que** la partie médiane de châssis secondaire (C) est logée dans les zones de sommet (6, 7) ou la zone de pied du Y.

5. Châssis secondaire pour essieu arrière selon l'une quelconque des revendications 1 à 4, **caractérisé en ce que** la partie médiane de châssis secondaire (C) est un profilé creux carré.

6. Châssis secondaire pour essieu arrière selon l'une quelconque des revendications 1 à 5, **caractérisé en ce que** les parties latérales de châssis secondaire (A, B) en forme de V ou de Y et le support médian de châssis secondaire (C) sont soudés les uns aux autres.

7. Châssis secondaire pour essieu arrière selon l'une quelconque des revendications 1 à 6, **caractérisé en ce que** les parties latérales de châssis secondaire (A, B) et/ou la partie médiane de châssis secondaire (C) se composent de métal léger.

8. Châssis secondaire pour essieu arrière selon la revendication 7, **caractérisé en ce que** le métal léger est un alliage d'Al.

9. Châssis secondaire pour essieu arrière selon l'une quelconque des revendications 1 à 8, **caractérisé en ce que** les parties latérales de châssis secondaire (A, B) sont des pièces moulées sous pression.

10. Châssis secondaire pour essieu arrière selon l'une quelconque des revendications 1 à 9, **caractérisé en ce que** la partie médiane de châssis secondaire (C) est un profilé extrudé.

11. Châssis secondaire pour essieu arrière selon l'une quelconque des revendications 1 à 10, **caractérisé en ce que** les évidements (12, 13, 14, 15) sont prévus pour la fixation du châssis secondaire (1) sur la carrosserie au niveau de l'extrémité des branches des parties latérales de châssis secondaire (A, B).
